# EUROPÄISCHE PATENTSCHRIFT

(11) **EP 3 084 202 B1**
(45) Veröffentlichungstag und Bekanntmachung des Hinweises auf die Patenterteilung: **28.08.2019**
(21) Anmeldenummer: 14798708.5
(22) Anmeldetag: 13.11.2014
(51) Int. Cl.: F02M 43/04, F02M 45/08, F02M 63/00, F02M 55/00

(54) **DUAL-FUEL-KRAFTSTOFFINJEKTOR**
DUAL-FUEL FUEL INJECTOR
INJECTEUR DE CARBURANT À DEUX COMBUSTIBLES

(30) Priorität: 20.12.2013 DE 102013021810
(43) Veröffentlichungstag der Anmeldung: 26.10.2016
(73) Patentinhaber: Woodward L'Orange GmbH, 70435 Stuttgart (DE)
(72) Erfinder: KALENBORN, Markus, 89160 Dornstadt (DE)
(74) Vertreter: Conroy, John
(86) Internationale Anmeldenummer: PCT/EP2014/003046
(87) Internationale Veröffentlichungsnummer: WO 2015/090494

(56) Entgegenhaltungen:
- WO-A1-00/15956
- WO-A1-2012/072881
- DE-A1- 10 335 211
- JP-A- 2006 105 008
- JP-A- 2010 265 855
- US-A1- 2009 020 631
- US-A1- 2013 047 964
- US-A1- 2013 048 750
- US-A1- 2013 319 373

## Beschreibung

Die vorliegende Erfindung betrifft einen Dual-Fuel-Kraftstoffinjektor für eine Kraftstoffeinspritzeinrichtung, insbesondere einer Brennkraftmaschine, gemäß dem Oberbegriff von Anspruch 1. Der Dual-Fuel-Kraftstoffinjektor ist insbesondere mit Zündstrahl-Motoren verwendbar, welche neben einem Zündstrahlbetrieb mit Brenngas (und einem Flüssigkraftstoff-Zündstrahl) einen reinen Flüssigkraftstoffbetrieb vorsehen. Als Flüssigkraftstoff kann zum Beispiel Dieselkraftstoff, Schweröl oder Bioöl vorgesehen sein.

Ein Dual-Fuel-Kraftstoffinjektor gemäß dem Stand der Technik ist aus der JP2010265855 A bekannt.

Bei gattungsgemäßen Dual-Fuel-Kraftstoffinjektoren, welche zur (indirekten) Steuerung der Gasinjektoreinheit Flüssigkraftstoff verwenden (Prinzip Pilotventil-Aktuator-Steuerraum), insbesondere solchen, welche von Hochdruckgaseinspritzung in Verbindung mit einer Strahlzündung durch Flüssigkraftstoff Gebrauch machen, entsteht regelmäßig und in nicht vernachlässigbarer Menge Mischleckage, i.e. über die Führung der jeweiligen Gasdüsennadel, über welche der Gasdüsenraum mit dem Steuerraum kommuniziert. Der Gasanteil dieser Mischleckage wird in Separatoren getrennt, wobei der Flüssigkraftstoff in den Tank zurückgeleitet und das Gas wiederverdichtet oder in den Ansaugtrakt des Motors eingeleitet wird. Dies ist in nachteiliger Weise aufwändig.

Ausgehend hiervon liegt der vorliegenden Erfindung die Aufgabe zu Grunde, einen Dual-Fuel-Kraftstoffinjektor anzugeben, welcher das Entstehen von Mischleckage zu vermeiden hilft.

Diese Aufgabe wird durch die Merkmale des Anspruchs 1 gelöst. Vorteilhafte Weiterbildungen und Ausführungsformen der Erfindung sind in den weiteren Ansprüchen angegeben.

Vorgeschlagen wird erfindungsgemäß ein Dual-Fuel-Kraftstoffinjektor (Zweistoff-Injektor; insbesondere für einen ersten, flüssigen und einen zweiten, gasförmigen Kraftstoff), insbesondere ein Diesel-Gas-Injektor. Der Dual-Fuel-Kraftstoffinjektor ist für eine Kraftstoffeinspritzeinrichtung einer Brennkraftmaschine vorgesehen, insbesondere z.B. für ein Gas-Common-Rail-System. Allgemein ist der Kraftstoffinjektor bevorzugt zur Verwendung mit einer Brennkraftmaschine in Form eines Gasmotors, insbesondere auf Basis eines Otto- oder Dieselmotors (mit innerer Gemischbildung), weiterhin insbesondere mit einem Groß(diesel)motor bereitgestellt. Der Dual-Fuel-Kraftstoffinjektor kann neben Kraftfahrzeuganwendungen, insbesondere in Nutzfahrzeugen oder Schiffen, auch für stationäre Anwendungen, zum Beispiel in Blockheizkraftwerken oder Industrieumgebungen vorgesehen sein.

Bevorzugt ist der vorgeschlagene Dual-Fuel-Kraftstoffinjektor bereitgestellt, sowohl in einem reinen Flüssigkraftstoffbetrieb als auch im Flüssigkraftstoff-/Gasbetrieb mit insbesondere beliebigem Gas-/Flüssigkraftstoffanteil betrieben zu werden, insbesondere im Zündstrahlverfahren.

Der erfindungsgemäß vorgeschlagene Dual-Fuel-Kraftstoffinjektor weist eine Flüssigkraftstoff-Injektoreinheit mit einer Düsennadel auf, welche Düsennadel einer Flüssigkraftstoff-Düsenanordnung des Dual-Fuel-Kraftstoffinjektors bzw. der Flüssigkraftstoff-Injektoreinheit zugeordnet ist und welche Düsennadel über einen ersten Steuerraum (des Dual-Fuel-Kraftstoffinjektors) hubsteuerbar ist. In Abhängigkeit der Hubstellung der Düsennadel kann an den Injektor versorgter Flüssigkraftstoff über die Flüssigkraftstoff-Düsenanordnung für einen Einspritzvorgang aus dem Injektor ausgebracht werden, i.e. in einen Brennraum, z.B. zur Bereitstellung eines Zündstrahles oder für einen reinen Flüssigkraftstoff-Einspritzvorgang. Bevorzugt ist die Flüssigkraftstoff-Injektoreinheit zur Steuerung der Düsennadel insoweit nach dem Prinzip indirekt gesteuerte Injektoreinheit ausgebildet.

Der erfindungsgemäß vorgeschlagene Dual-Fuel-Kraftstoffinjektor weist weiterhin eine Gas-Injektoreinheit mit einer Gas-Düsennadel auf, welche Gas-Düsennadel einer Gasdüsenanordnung des Dual-Fuel-Kraftstoffinjektors bzw. der Gas-Injektoreinheit zugeordnet ist und welche Gas-Düsennadel über einen zweiten Steuerraum (des Dual-Fuel-Kraftstoffinjektors) hubsteuerbar ist. Analog zu der Flüssigkraftstoff-Injektoreinheit, kann in Abhängigkeit der Hubstellung der Gas-Düsennadel an den Injektor versorgtes Brenngas über die Gasdüsenanordnung für einen Gaseinspritzvorgang aus dem Injektor ausgebracht werden, i.e. in den Brennraum, insbesondere für den Gas-Zündstrahl-Betrieb. Bevorzugt arbeitet die Gas-Injektoreinheit - wie die Flüssigkraftstoff-Injektoreinheit - zur Steuerung der Gasdüsennadel ebenfalls nach dem Prinzip indirekt gesteuerte Injektoreinheit.

Die Gas-Düsennadel kann neben oder in einer Koaxialanordnung mit der Düsennadel der Flüssigkraftstoff-Injektoreinheit angeordnet sein. Bevorzugt ist die Gas-Injektoreinheit mit einer Mehrzahl von Gas-Düsennadeln ausgebildet, d.h. insbesondere mit jeweils einem zugeordneten zweiten Steuerraum. Vorzugsweise umgeben die mehreren Düsennadeln der Gas-Injektoreinheit im Dual-Fuel-Kraftstoffinjektor die Düsennadel der Flüssigkraftstoff-Injektoreinheit (insbesondere in einer konzentrischen Ringanordnung mit zentraler Flüssigkraftstoff-Düsennadel). Derart lässt sich eine bauraumgünstige Nadelanordnung mit gleichzeitig vorteilhafter 360°-Brennraumabdeckung erzielen.

Der Dual-Fuel-Kraftstoffinjektor gemäß der Erfindung ist weiterhin derart ausgestaltet, dass der erste und der zweite Steuerraum für die Hubsteuerung der jeweiligen Düsennadel mit einem Steuerfluid je (hydraulisch) beaufschlagbar (ansteuerbar) sind und Steuerfluid aus dem ersten und zweiten Steuerraum je weiterhin - kontrolliert - absteuerbar ist. Bei Steuerfluidbeaufschlagung bzw. Ansteuerung eines jeweiligen Steuerraums kann eine darüber hubgesteuerte Düsennadel druckbelastet werden (via das Steuerfluid), bei Absteuerung insoweit entlastet, i.e. endseitig an einem düsenfernen Ende derselben. Bevorzugt ist im Rahmen der Erfindung Flüssigkraftstoff als - den Steuerräumen gemeinsames - Steuerfluid vorgesehen, z.B. Dieselkraftstoff.

Erfindungsgemäß weist der Dual-Fuel-Kraftstoffinjektor - in kennzeichnender Weise - einen Steuerfluidspeicher auf, in welchen aus dem ersten Steuerraum abgesteuertes Steuerfluid einbringbar ist bzw. bei Flüssigkraftstoff-Einspritzbetrieb des Dual-Fuel-Kraftstoffinjektors (Single-Fuel / Dual-Fuel-Flüssigkraftstoffbetrieb) eingebracht wird. Das aus dem ersten Steuerraum abgesteuerte Steuerfluid wird hierbei insbesondere sämtlich (und ausschließlich) dem Steuerfluidspeicher zugeführt, insbesondere über eine geeignete Strömungsverbindung des ersten Steuerraums mit dem Steuerfluidspeicher am Dual-Fuel-Kraftstoffinjektor.

Der Dual-Fuel-Kraftstoffinjektor ist - in kennzeichnender Weise - weiterhin eingerichtet, den (jeweiligen) zweiten Steuerraum mit Steuerfluid aus dem Steuerfluidspeicher für die Hubsteuerung der Gas-Düsennadel zu beaufschlagen bzw. anzusteuern (insoweit kann der - zwischen erstem und zweitem Steuerraum angeordnete - Steuerfluidspeicher als Zwischenspeicher bezeichnet werden), insbesondere ausschließlich mit Steuerfluid aus dem Steuerfluidspeicher und weiterhin insbesondere in einem Dual-Fuel-Betrieb (Gas/Flüssigkraftstoff). Hierzu kann wiederum eine geeignete Strömungsverbindung des Steuerfluidspeichers mit dem zweiten Steuerraum am Dual-Fuel-Kraftstoffinjektor bereitgestellt sein.

Bei dem erfindungsgemäßen Dual-Fuel-Kraftstoffinjektor kann bei bevorzugten Ausführungsformen insbesondere ein Steuerfluid-Strömungsweg bzw. -kreis am Injektor bereitgestellt sein, welcher von einem hochdruckseitigen Einlass des Kraftstoffinjektors in den ersten Steuerraum und stromabwärts desselben bzw. nachfolgend in den Steuerfluidspeicher führt, aus dem Steuerfluidspeicher in den zweiten Steuerraum und nachfolgend zu einem niederdruckseitigen (Leckage) Auslass des Injektors. Zur Steuerfluid-Absteuerung kann hierbei je ein Ventil (Pilotventil) in der Strömungsverbindung erster Steuerraum - Steuerfluidspeicher und in der Strömungsverbindung zweiter Steuerraum - niederdruckseitiger Auslass vorgesehen sein, so dass diese Strömungsverbindungen je selektiv unterbrechbar sind. Mithin ist der Injektor mit geringem baulichen Aufwand herstellbar.

Der erfindungsgemäße Dual-Fuel-Kraftstoffinjektor ermöglicht auf vorteilhaft einfache Weise eine stabile Beaufschlagung des zweiten Steuerraums mit einem an den Gasdruck an der Gas-Injektoreinheit angeglichenen Steuerdruck und kann somit durch Verhindern des Überströmens von Gas in den zweiten Steuerraum oder von Steuerfluid in den Gasteil (Gasdüsenraum) die Bildung von Mischleckage in einem Dual-Fuel-Betrieb wirksam verhindern. Insbesondere kann die Erfindung daher bei gattungsgemäßen Dual-Fuel-Kraftstoffinjektoren Anwendung finden, bei welchem die wenigstens eine Gas-Düsennadel in einer Nadelführung der Gas-Injektoreinheit geführt ist, über welche Nadelführung der zweite Steuerraum mit einem Gas-Düsenraum der Gas-Injektoreinheit kommuniziert und der Dual-Fuel-Kraftstoffinjektor eingerichtet ist, Brenngas in den Gas-Düsenraum einzubringen.

Erfindungsgemäß ist der Dual-Fuel-Kraftstoffinjektor derart ausgestaltet, dass - insbesondere in einem Dual-Fuel-Betrieb - ein Druckniveau im Steuerfluidspeicher auf ein (Einspritz-)Gasdruckniveau der bzw. an der Gas-Injektoreinheit einstellbar ist (identische bzw. im Wesentlichen identische Druckniveaus), zum Beispiel auf ein konstantes Druckniveau (zum Beispiel das Versorgungs-Gasdruckniveau) oder ein variables Gasdruckniveau (zum Beispiel augenblickliches Einspritzdruckniveau). Bevorzugt weist der Dual-Fuel-Kraftstoffinjektor hierfür eine Reguliervorrichtung, insbesondere ein Ventil auf, welches dem Steuerfluidspeicher zugeordnet, z.B daran angeordnet ist. Die Reguliervorrichtung, insbesondere ein selbstregelndes Ventil und/oder Druckregelventil, stellt hierbei das Druckniveau des Steuerfluids im Steuerfluidspeicher auf das Gas-Druckniveau an der Gas-Injektoreinheit ein. Für eine Druckregelung mittels des Ventils kann der Steuerfluidspeicher (über das Ventil) zum Beispiel zur Niederdruckseite des Injektors hin druckmindernd entlastet werden.

Alternativ oder ergänzend ist der Dual-Fuel-Kraftstoffinjektor oder eine damit gebildete Einspritzvorrichtung eingerichtet, zumindest zeitweise ein Druckniveau des Steuerfluids im Steuerfluidspeicher auf ein Druckniveau - geringfügig - oberhalb eines Druckniveaus einzustellen, mit welchem Gas für eine Einspritzung über die Gas-Injektoreinheit an derselben bereitgestellt ist. Derart kann zum Beispiel eine Düsennadelschmierung mittels Flüssigkraftstoff vorteilhaft unaufwändig realisiert werden. Für die Einstellung des Druckniveaus kann eine wie vorstehend erläuterte Reguliervorrichtung am Kraftstoffinjektor vorgesehen sein.

Weitere bevorzugte Ausgestaltungen des Dual-Fuel-Kraftstoffinjektors sehen vor, dass der Dual-Fuel-Kraftstoffinjektor neben dem Steuerfluidspeicher einen weiteren Steuerfluidspeicher aufweist, welcher mit hochdruckbeaufschlagtem Steuerfluid versorgt wird. Der weitere Steuerfluidspeicher, welcher in dem oben erwähnten Steuerfluid-Strömungskreis bevorzugt zwischen dem hochdruckseitigen Injektoreinlass und dem erstem Steuerraum angeordnet ist, ist insbesondere ein (Hochdruck-)Kraftstoff-Einzeldruckspeicher des Kraftstoffinjektors, insbesondere ein Einzeldruckspeicher, über welchen systemdruckbeaufschlagter Kraftstoff (entsprechend Steuerfluid) auch an die Düsenanordnung der Flüssigkraftstoff-Injektoreinheit zuführbar ist. Über den weiteren Steuerfluidspeicher kann der erste Steuerraum, i.e der Flüssigkraftstoff-Injektoreinheit, hierbei mit (hochdruckbeaufschlagtem) Steuerfluid angesteuert bzw. beaufschlagt werden. Bevorzugt sind sowohl der Steuerfluidspeicher als auch der weitere Steuerfluidspeicher gemeinsam in einem Gehäuse des Kraftstoffinjektors angeordnet.

Weiterhin der beabsichtigten Vermeidung von Mischleckage zuträglich wird im Rahmen der Erfindung auch vorgeschlagen, dass die Gas-Injektoreinheit ein Steuer- bzw. Pilotventil für die kontrollierte Absteuerung von Steuerfluid aus dem zweiten Steuerraum aufweist, welches als 3/2-Wege-Ventil bereitgestellt und Umschaltvorgänge im Wesentlichen - vorteilhaft - ohne Kurzschlussleckage ermöglicht.

Weitere bevorzugte Ausgestaltungen der Erfindung sehen daneben vor, dass im Steuerfluidspeicher, alternativ oder zusätzlich z.B. in der Strömungsverbindung zum Steuerfluidspeicher, eine Vorrichtung zur Pulsations- oder Druckstoßdämpfung aufgenommen ist. Zur Geringhaltung der Druckschwankungen kann ein Pulsationsdämpfer, z.B. in Form eines Faltenbalgs oder einer Membran im Steuerfluidspeicher vorgesehen sein.

Vorgeschlagen wird im Rahmen der Erfindung weiterhin eine Kraftstoffeinspritzeinrichtung mit wenigstens einem wie vorstehend erläuterten Dual-Fuel-Kraftstoffinjektor. Die Kraftstoffeinspritzeinrichtung ist vorzugsweise eingerichtet, hochdruckbeaufschlagten Flüssigkraftstoff als Steuerfluid an den wenigstens einen Dual-Fuel-Kraftstoffinjektor zu versorgen, insbesondere aus einem Kraftstofftank für Flüssigkraftstoff und weiterhin über eine dem Tank nachgeordnete Hochdruckerzeugungsvorrichtung. Hierbei ist die Kraftstoffeinspritzeinrichtung bevorzugt auch eingerichtet, im Steuerfluidspeicher für einen Gaseinspritzbetrieb ein Druckniveau unterhalb des Hochdruckniveaus des an den Dual-Fuel-Kraftstoffinjektor versorgten Steuerfluids einzustellen, insbesondere ein an ein Gasdruckniveau an der Gas-Injektoreinheit angeglichenes Druckniveau.

Die Kraftstoffeinspritzeinrichtung ist weiterhin bevorzugt eingerichtet, den Dual-Fuel-Kraftstoffinjektor in einem Zünd-Strahlbetrieb und/oder in einem Flüssigkraftstoffbetrieb zu betreiben. Hiebei wird die Gas-Injektoreinheit im Zündstrahlbetrieb insbesondere über den Steuerfluidspeicher angesteuert.

Weitere Merkmale und Vorteile der Erfindung ergeben sich aus der nachfolgenden Beschreibung von Ausführungsbeispielen der Erfindung, anhand der Figur der Zeichnungen, die erfindungswesentliche Einzelheiten zeigt, und aus den Ansprüchen. Die einzelnen Merkmale können je einzeln für sich oder zu mehreren in beliebiger Kombination bei einer Variante der Erfindung verwirklicht sein.

Bevorzugte Ausführungsformen der Erfindung werden nachfolgend anhand der beigefügten Zeichnung näher erläutert. Es zeigt:

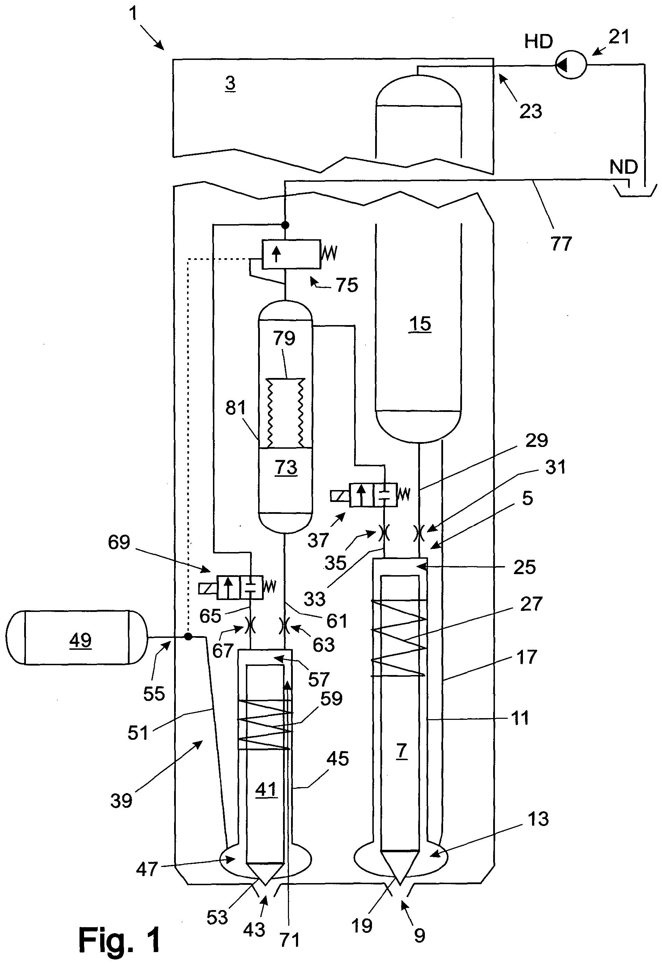

- Fig. 1: exemplarisch und schematisch einen Dual-Fuel-Kraftstoffinjektor gemäß einer möglichen Ausführungsform der Erfindung.

In der nachfolgenden Beschreibung und den Zeichnungen entsprechen gleichen Bezugszeichen Elemente gleicher oder vergleichbarer Funktion.

**Fig. 1** zeigt einen erfindungsgemäßen Dual-Fuel-Kraftstoffinjektor 1 (Zweistoffdüse bzw. Zweistoff-Injektor) für eine Kraftstoffeinspritzeinrichtung einer Brennkraftmaschine (Verbrennungsmotor), bevorzugt für ein Gas-Common-Rail-System. Der Dual-Fuel-Kraftstoffinjektor 1 ist für den Einspritzbetrieb mit einem ersten, flüssigen Kraftstoff (insbesondere Dieselkraftstoff) und einem zweiten, gasförmigen Kraftstoff (Brenngas) bereitgestellt, das heißt sowohl für einen Single-Fuel-Betrieb mit Flüssigkraftstoff als auch einen Dual-Fuel-Betrieb mit Brenngas und Flüssigkraftstoff-Zündstrahl.

Der Dual-Fuel-Kraftstoffinjektor 1 weist - in einem Injektorgehäuse 3 - eine Flüssigkraftstoff-Injektoreinheit 5 mit einer Düsennadel 7 auf, welche einer Flüssigkraftstoff-Düsenanordnung 9 des Dual-Fuel-Kraftstoffinjektors 1 zugeordnet ist. Die Düsennadel 7 ist in einer Axialbohrung 11 der Flüssigkraftstoff-Injektoreinheit 5 aufgenommen, welche zugleich als Führung der Düsennadel 7 bereitgestellt ist.

Am düsennahen Ende der Axialbohrung 11 ist ein Düsenraum 13 der Flüssigkraftstoff-Injektoreinheit 5 gebildet, in welchen hochdruckbeaufschlagter Flüssigkraftstoff aus einem Einzeldruckspeicher 15 des Kraftstoffinjektors 1 einbringbar ist, i.e. über eine Hochdruck-Kraftstoffleitung 17. In Abhängigkeit der Hubstellung der Düsennadel 7 (Offenstellung/ Schließstellung), welche an deren düsennahen Ende hierzu gegen einen Ventilsitz 19 wirken kann, kann Kraftstoff aus dem Düsenraum 13 über wenigstens ein Spritzloch der Flüssigkraftstoff-Düsenanordnung 9 ausgebracht werden, das heißt für einen Einspritzvorgang. Der Einzeldruckspeicher 15 kann zum Beispiel über ein Rail oder eine Hochdruckpumpe 21 einer Kraftstoffeinspritzeinrichtung versorgt werden, das heißt über einen hochdruckseitigen Kraftstoffeinlass 23 des Injektors 1 angeströmt werden. Hierbei sind anliegende Druckniveaus jenseits von 2000 oder gar 2500 bar Systemdruck möglich.

An einem düsenfernen Ende der axial hubverschieblichen Düsennadel 7 ist ein erster Steuerraum 25 des Dual-Fuel-Kraftstoffinjektors 1 gebildet, um den Hub der Düsennadel 7 - weiterhin im Wirkverbund mit einer Düsennadelfeder 27 (Schließfeder) - steuern zu können. Der erste Steuerraum 25 ist seitens des Einzeldruckspeichers 15 mit Steuerfluid in Form des hochdruckbeaufschlagten Flüssigkraftstoffes beaufschlagbar, wozu eine (Zulauf-)Strömungsverbindung 29 mit Zulaufdrossel 31 vorgesehen ist. Aus dem ersten Steuerraum 25 ist das Steuerfluid über eine weitere (Ablauf-)Strömungsverbindung 33 mit Ablaufdrossel 35 auch absteuerbar, wobei die weitere Strömungsverbindung 33 über ein erstes Pilotventil 37 des Dual-Fuel-Kraftstoffinjektors 1 bzw. der Flüssigkraftstoff-Injektoreinheit 5 selektiv unterbrechbar ist (für kontrolliertes Absteuern). Das erste Pilotventil 37 kann baulich einfach als 2/2-Wege-Ventil bereitgestellt werden, insbesondere als magnetaktuiertes Ventil.

Analog zu der Flüssigkraftstoff-Injektoreinheit 5 gebildet weist der Dual-Fuel-Kraftstoffinjektor 1 in dem Injektorgehäuse 3 weiterhin eine Gas-Injektoreinheit 39 mit einer Gas-Düsennadel 41 auf, welche einer Gas-Düsenanordnung 43 des Dual-Fuel-Kraftstoffinjektors bzw. der Gas-Injektoreinheit 39 zugeordnet ist. Die Gas-Düsennadel 41 ist in einer Axialbohrung 45 der Gas-Injektoreinheit 39 aufgenommen, welche Axialbohrung45 zugleich der Führung der Gas-Düsennadel 41 dient.

Am düsennahen Ende der Axialbohrung 45 ist ein Gas-Düsenraum 47 der Gas-Injektoreinheit 39 gebildet, in welchen hochdruckbeaufschlagter, gasförmiger Kraftstoff in Form von Brenngas, zum Beispiel aus einem Brenngasvorrat 49 oder seitens einer Brenngasversorgung einer Kraftstoffeinspritzeinrichtung, einbringbar ist, i.e. über eine Brenngasleitung 51. In Abhängigkeit der Hubstellung der Gas-Düsennadel 41 (Offenstellung/Schließstellung), welche an deren düsennahen Ende hierzu gegen einen Ventilsitz 53 wirken kann, kann Brenngas aus dem Düsenraum 47 über wenigstens ein Spritzloch der Gas-Düsenanordnung 43 ausgebracht werden, das heißt für einen Gas-Einspritzvorgang (in einen Brennraum einer Brennkraftmaschine). Im Rahmen der Brenngasversorgung über einen Brenngaseinlass 55 des Injektors 1 können Druckniveaus von zum Beispiel 300 bar am Gas-Düsenraum 47 vorherrschen.

An einem düsenfernen Ende der axial hubverschieblichen Gas-Düsennadel 41 ist ein zweiter Steuerraum 57 des Dual-Fuel-Kraftstoffinjektors 1 gebildet, um den Hub der Gas-Düsennadel 41 - weiterhin im Wirkverbund mit einer Düsennadelfeder 59 - steuern zu können. Der zweite Steuerraum 57 ist wie der erste Steuerraum 25 mit Steuerfluid in Form des Flüssigkraftstoffs beaufschlagbar, wozu eine (Zulauf-)Strömungsverbindung 61 mit Zulaufdrossel 63 vorgesehen ist. Aus dem zweiten Steuerraum 57 ist das Steuerfluid über eine weitere (Ablauf-)Strömungsverbindung 65 mit Ablaufdrossel 67 auch absteuerbar, das heißt zur Niederdruckseite ND des Injektors 1, wobei die weitere Strömungsverbindung 65 über ein zweites Pilotventil 69 des Dual-Fuel-Kraftstoffinjektors bzw. der Gas-Injektoreinheit selektiv unterbrechbar ist (für kontrolliertes Absteuern). Das zweite Pilotventil 69 kann baulich einfach als 2/2-Wege-Ventil bereitgestellt werden, insbesondere als magnetaktuiertes Ventil. Alternativ und mit einer vorteilhaft vernachlässigbaren Kurzschluss-Leckage einhergehend, kann das zweite Pilotventil 69 als 3/2-WegeVentil bereitgestellt sein.

Bei der Gas-Injektoreinheit 39, bei welcher - wie bei der Flüssigkraftstoff-Injektoreinheit 5 - der Hub der Düsennadel 41 indirekt über Belastung und Entlastung des Steuerraums 57 (via das Steuerfluid) gesteuert wird, ist ersichtlich ein Leckagepfad 71 (überdimensioniert dargestellt) eröffnet, über welchen der Gas-Düsenraum 47 und der zweite Steuerraum 57 miteinander kommunizieren. Entlang bzw. über einen solchen Leckagepfad 71 können sich - im Stand der Technik - Brenngas und Steuerfluid bzw. Flüssigkraftstoff mischen, mithin Mischleckage verursachen.

Wie Fig. 1 veranschaulicht, weist der Dual-Fuel-Kraftstoffinjektor 1 erfindungsgemäß einen Steuerfluidspeicher 73 (Kraftstoff-(Zwischen-)Speicher) auf, in welchen abgesteuertes Steuerfluid in Form von Flüssigkraftstoff aus dem ersten Steuerraum 25 einbringbar ist. Hierzu ist die weitere Strömungsverbindung 33 (mit Ablaufdrossel 35) aus dem ersten Steuerraum 25, welche über das erste Pilotventil 37 selektiv unterbrechbar ist, an den Steuerfluidspeicher 73 geführt, d.h. kommunizierend. Das Steuerfluid, welches im Rahmen einer Absteuerung (Entlastung des ersten Steuerraums 25) aus dem ersten Steuerraum 25 abgeführt wird, gelangt stromabwärts über die weitere Strömungsverbindung 33 in den Steuerfluidspeicher 73. Mit anderen Worten ist der Dual-Fuel-Kraftstoffinjektor 1 eingerichtet, den Steuerfluidspeicher 73 via die Absteuerleckage aus dem ersten Steuerraum 25 bzw. via die Absteuerleckage aus der Flüssigkraftstoff-Injektoreinheit 5 zu befüllen. Ein Befüllvorgang findet bei Verwendung mit einer Kraftstoffeinspritzeinrichtung zum Beispiel vor jeder Gaseinbringung in einen Brennraum statt, wenn eine vorgelagerte Zündölmenge eingespritzt wird. Der Steuerfluidspeicher 73 ist - wie bevorzugt auch der Einzeldruckspeicher 15 - im Gehäuse 3 des Dual-Fuel-Kraftstoffinjektors 1 aufgenommen.

Angemerkt sei, dass das Volumen des Steuerfluidspeichers 73 etwa dem 50- bis 100-fachen Volumen der Absteuerleckage eines Einspritzereignisses der Gas-Injektoreinheit 39 entsprechen sollte. Insbesondere bei Ausgestaltungen des Dual-Fuel-Kraftstoffinjektors 1, bei welchen das zweite Pilotventil 69 als 3/2-Wege-Ventil bereitgestellt ist, welches vorteilhaft auch nur geringen Druckabfall im Steuerfluidspeicher 73 (bei Schaltvorgängen) verursacht, kann der Steuerfluidspeicher 73 z.B. auch kleinvolumiger sein, d.h. bauraumsparend.

Wie Fig. 1 weiter veranschaulicht, ist der Dual-Fuel-Kraftstoffinjektor 1 weiterhin eingerichtet, den zweiten Steuerraum 57 mit Steuerfluid aus dem Steuerfluidspeicher 73 für die Hubsteuerung der Gas-Düsennadel 41 zu beaufschlagen, das heißt die Gas-Injektoreinheit 39 mit Steuerfluid aus dem Steuerfluidspeicher 73 anzusteuern. Das aus dem Steuerfluidspeicher 73 für die Steuerfluid-Beaufschlagung des zweiten Steuerraums 57 entnommene Steuerfluid wird über die Zulauf-Strömungsverbindung 61 (mit Drosselvorrichtung 63) an den zweiten Steuerraum 57 zugeführt, welche den Steuerfluidspeicher 73 mit dem zweiten Steuerraum 57 kommunizierend verbindet.

Das Vorsehen des Steuerfluidspeichers 73 ermöglicht vorteilhaft die Verwendung jenes Steuerfluids für die Ansteuerung der Gas-Injektoreinheit 39, welches auch für die Flüssigkraftstoff-Injektoreinheit 5 verwendet wird (Flüssigkraftstoff), aber mit einem davon verschiedenen, niedrigeren Druckniveau (als bei der Flüssigkraftstoff-Injektoreinheit 5). Mit dem niedrigeren Druckniveau kann ein Überströmen des Steuerfluids in den Gas-Düsenraum 47 der Gas-Injektoreinheit 39, i.e. entlang des Leckagepfads 71, nunmehr wirksam vermieden werden.

Bevorzugt wird ein Druckniveau in dem Steuerfluidspeicher 73 eingestellt, welches dem Gas-Druckniveau (Einspritzdruck) an der Gas-Injektoreinheit 39 entspricht. Hierbei wird auch ein Überströmen von Gas in den zweiten Steuerraum 57 wirksam vermieden. Zur Bereitstellung dieser Funktionalität weist der Dual-Fuel-Kraftstoffinjektor 1 bevorzugt ein Ventil 75, insbesondere ein dem Steuerfluidspeicher 73 zugeordnetes Ventil 75 auf, über welches der Druck im Steuerfluidspeicher 73 auf das Druckniveau des Gasdrucks regelbar ist. Das Ventil 75 ist bevorzugt ein selbstregelndes Ventil, insbesondere Druckregelventil, welchem als Eingangsgröße der momentan herrschende Druck im Steuerfluidspeicher 73 zugeführt werden kann, zusätzlich zum Beispiel ein tatsächlicher Gasdruckwert an der Gas-Injektoreinheit 39, siehe gestrichelte Signalleitung in Fig.1. Vorgesehen sein kann zum Beispiel, den Steuerfluidspeicherdruck auf einen festen Wert zu regeln (Konstantwertregelung), zum Beispiel korrespondierend mit einem vorgesehenen Gas-Versorgungsdruck (z.B. 300bar) oder dem Momentanwert zu folgen, zum Beispiel wenn der Druck bei Teillastanpassung (z.B. auf 150 bar) abgesenkt sein soll.

Mit dem Ventil 75 kann zum Beispiel, zumindest zeitweise, auch ein Druckniveau im Steuerfluidspeicher 73 eingestellt werden, welches geringfügig oberhalb eines Gas-(Einspritz-) Druckniveaus an der Gas-Injektoreinheit 39 liegt. Hierbei auftretende Flüssigkraftstoffleckage (Steuerfluid-Leckage) aus dem zweiten Steuerraum 57 kann diesem Fall vorteilhaft zur Schmierung der Gas-Düsennadel 41 genutzt werden.

Das Ventil 75, welches insbesondere druckmindernd wirkt, ist bevorzugt in einer Strömungsverbindung 77 angeordnet, welche aus dem Steuerfluidspeicher 73 zur Injektor-Niederdruckseite (Leckage) ND führt.

Der Steuerfluidspeicher 73 weist weiterhin bevorzugt, wie in Fig. 1 veranschaulicht, eine Vorrichtung 79 zur Pulsationsdämpfung auf, welche in dem Steuerfluidspeichergehäuse 81 angeordnet ist. Die Vorrichtung 79 zur Pulsationsdämpfung kann von einem Faltenbalg Gebrauch machen, alternativ oder zusätzlich zum Beispiel von einer Membran oder einer Kolbenanordnung. Daneben sind weitere Ausgestaltungsformen von Pulsationsdämpfungsvorrichtungen denkbar. Insbesondere aufgrund des im Steuerfluidspeicher 73 gegenüber dem Hochdruckniveau (z.B. 2000 bis 2500 bar) bzw. Systemdruckniveau verringerten Druckniveaus ist die Anwendung einer solchen Dämpfungsvorrichtung im Steuerfluidspeicher 73 vorteilhaft unproblematisch.

Im Rahmen der vorliegenden Erfindung wird weiterhin vorgeschlagen, das Verhältnis der Absteuermengen der Gas-Injektoreinheit 39 in Bezug zu der Flüssigkraftstoff-Injektoreinheit 5 möglichst klein zu halten. Weiterhin ist vorgesehen, die Drosselabstimmung von Zu- und Ablaufdrossel so zu bemessen, dass die pro Zündöleinspritzung aus dem ersten Steuerraum 25 abgesteuerte Leckagemenge (Steuerfluid) mindestens der 1,2-fachen benötigten Steuerleckage für die Gas-Injektoreinheit 39 entspricht.

Mit dem vorgeschlagenen Dual-Fuel-Kraftstoffinjektor 1 kann neben der Vermeidung von Mischleckage auch dem Entstehen von Gasleckage wirksam entgegengetreten werden. Aufgrund der mit der Erfindung einstellbaren, gleichen Druckniveaus an den entgegengesetzten Enden der Gas-Düsennadel 41 (Steuerraum 57 / Düsenraum 47), kann weiterhin das Kräftegleichgewicht an der Gasnadel 41 verbessert abgestimmt werden.

## Patentansprüche

1. Dual-Fuel-Kraftstoffinjektor (1) für eine Kraftstoffeinspritzeinrichtung, aufweisend:
- eine Flüssigkraftstoff-Injektoreinheit (5) mit einer Düsennadel (7), welche einer Flüssigkraftstoff- Düsenanordnung (9) des Dual-Fuel-Kraftstoffinjektors (1) zugeordnet ist und welche über einen ersten Steuerraum (25) hubsteuerbar ist;
- eine Gas-Injektoreinheit (39) mit einer Gas-Düsennadel (41), welche einer Gasdüsenanordnung (43) des Dual-Fuel-Kraftstoffinjektors (1) zugeordnet ist und welche über einen zweiten Steuerraum (57) hubsteuerbar ist;
- wobei der erste (25) und der zweite (57) Steuerraum für die Hubsteuerung der jeweiligen Düsennadel (7, 41) je mit einem Steuerfluid beaufschlagbar sind und das Steuerfluid aus dem ersten (25) und zweiten (57) Steuerraum je weiterhin absteuerbar ist; wobei
- der Dual-Fuel-Kraftstoffinjektor (1) einen Steuerfluidspeicher (73) aufweist, in welchen abgesteuertes Steuerfluid aus dem ersten Steuerraum (25) einbringbar ist; und wobei
- der Dual-Fuel-Kraftstoffinjektor (1) eingerichtet ist, den zweiten Steuerraum (57) mit Steuerfluid aus dem Steuerfluidspeicher (73) für die Hubsteuerung der Gas-Düsennadel (41) zu beaufschlagen,
**dadurch gekennzeichnet, dass**
- der Dual-Fuel-Kraftstoffinjektor (1) eingerichtet ist, ein Druckniveau des Steuerfluids im Steuerfluidspeicher (73) auf ein Druckniveau einzustellen, mit welchem Gas für eine Einspritzung über die Gas-Injektoreinheit (39) an derselben bereitgestellt ist; und/oder
- der Dual-Fuel-Kraftstoffinjektor (1) eingerichtet ist, ein Druckniveau des Steuerfluids im Steuerfluidspeicher (73) zumindest zeitweise auf ein Druckniveau geringfügig oberhalb eines Druckniveaus einzustellen, mit welchem Gas für eine Einspritzung über die Gas-Injektoreinheit (39) an derselben bereitgestellt ist.

2. Dual-Fuel-Kraftstoffinjektor nach einem der vorhergehenden Ansprüche,
**dadurch gekennzeichnet, dass**
- der Dual-Fuel-Kraftstoffinjektor (1) ein Ventil (75) aufweist, mittels welchem ein Druckniveau im Steuerfluidspeicher (73) einstellbar ist.

3. Dual-Fuel-Kraftstoffinjektor (1) nach einem der vorhergehenden Ansprüche,
**dadurch gekennzeichnet, dass**
- der Dual-Fuel-Kraftstoffinjektor (1) einen weiteren Steuerfluidspeicher (15) aufweist, welcher mit hochdruckbeaufschlagtem Steuerfluid versorgt wird;
- der erste Steuerraum (25) mit dem Steuerfluid aus dem weiteren Steuerfluidspeicher (15) beaufschlagt wird.

4. Dual-Fuel-Kraftstoffinjektor (1) nach einem der vorhergehenden Ansprüche,
**dadurch gekennzeichnet, dass**
- der Dual-Fuel-Kraftstoffinjektor (1) eingerichtet ist, den zweiten Steuerraum (57) und/oder die Gas-Injektoreinheit (39) mit Steuerfluid aus dem Steuerfluidspeicher (73) für die Hubsteuerung der Gas-Düsennadel (39) zu beaufschlagen, wobei das Steuerfluid-Druckniveau im Steuerfluidspeicher (73) gegenüber einem Steuerfluid-Druckniveau für die Ansteuerung der Flüssigkraftstoff-Injektoreinheit (5) abgesenkt ist.

5. Dual-Fuel-Kraftstoffinjektor (1) nach einem der vorhergehenden Ansprüche,
**dadurch gekennzeichnet, dass**
- die Gas-Injektoreinheit (39) ein Pilotventil (69) für die Absteuerung von Steuerfluid aus dem zweiten Steuerraum (57) aufweist;
- das Pilotventil (69) ein 3/2-Wege-Ventil ist.

6. Dual-Fuel-Kraftstoffinjektor (1) nach einem der vorhergehenden Ansprüche,
**dadurch gekennzeichnet, dass**
- das Volumen des Steuerfluidspeichers (73) dem 50-fachen bis 100-fachen Volumen des über den zweiten Steuerraum (57) abgesteuerten Steuerfluids eines Einspritzereignisses der Gas-Injektoreinheit (39) entspricht.

7. Dual-Fuel-Kraftstoffinjektor (1) nach einem der vorhergehenden Ansprüche,
**dadurch gekennzeichnet, dass**
- im Steuerfluidspeicher (73) eine Vorrichtung zur Pulsationsdämpfung (79) aufgenommen ist.

8. Dual-Fuel-Kraftstoffinjektor (1) nach einem der vorhergehenden Ansprüche,
**dadurch gekennzeichnet, dass**
- der Dual-Fuel-Kraftstoffinjektor (1) eine Strömungsverbindung (33) und/oder eine selektiv unterbrechbare Strömungsverbindung (33) aufweist, über welche abgesteuertes Steuerfluid aus dem ersten Steuerraum (25) in den Steuerfluidspeicher (73) einbringbar ist; und/oder
- der Dual-Fuel-Kraftstoffinjektor (1) eine Strömungsverbindung (61) aufweist, über welche der zweite Steuerraum (57) mit Steuerfluid aus dem Steuerfluidspeicher (73) beaufschlagbar ist.

9. Kraftstoffeinspritzeinrichtung,
**dadurch gekennzeichnet, dass**
- die Kraftstoffeinspritzeinrichtung wenigstens einen Dual-Fuel-Kraftstoffinjektor (1) nach einem der vorhergehenden Ansprüche aufweist.

10. Kraftstoffeinspritzeinrichtung nach Anspruch 9,
**dadurch gekennzeichnet, dass**
- die Kraftstoffeinspritzeinrichtung eingerichtet ist, hochdruckbeaufschlagten Flüssigkraftstoff als Steuerfluid an den Dual-Fuel-Kraftstoffinjektor (1) zu versorgen,
- die Kraftstoffeinspritzeinrichtung eingerichtet ist, im Steuerfluidspeicher (73) für einen Gaseinspritzbetrieb ein Druckniveau unterhalb des Hochdruckniveaus des an den Dual-Fuel-Kraftstoffinjektor (1) versorgten Steuerfluids einzustellen.

11. Kraftstoffeinspritzeinrichtung nach einem der Ansprüche 9 und 10,
**dadurch gekennzeichnet, dass**
- die Kraftstoffeinspritzeinrichtung eingerichtet ist, den Dual-Fuel-Kraftstoffinjektor (1) in einem Zünd-Strahlbetrieb und/oder in einem Flüssigkraftstoffbetrieb zu betreiben, wobei die Gas-Injektoreinheit (39) im Zündstrahlbetrieb über den Steuerfluidspeicher (73) angesteuert wird.

## Claims

1. Dual-fuel injector (1) for a fuel injection device, having:
- a liquid fuel injector unit (5) having a nozzle needle (7), which is assigned to a liquid fuel nozzle arrangement (9) of the dual-fuel injector (1) and the stroke of which can be controlled by means of a first control chamber (25);
- a gas injector unit (39) having a gas nozzle needle (41), which is assigned to a gas nozzle arrangement (43) of the dual-fuel injector (1) and the stroke of which can be controlled by means of a second control chamber (57);
- wherein the first (25) and second (57) control chambers can each be supplied with a control fluid in order to control the stroke of the respective nozzle needle (7, 41), and the control fluid can furthermore be discharged from both the first (25) and second (57) control chambers; wherein
- the dual-fuel injector (1) has a control fluid reservoir (73), into which discharged control fluid from the first control chamber (25) can be introduced; and wherein
- the dual-fuel injector (1) is configured to supply the second control chamber (57) with control fluid from the control fluid reservoir (73) in order to control the stroke of the gas nozzle needle (41),
**characterized in that**
- the dual-fuel injector (1) is configured to set a pressure level of the control fluid in the control fluid reservoir (73) to a pressure level at which gas is made available at the gas injector unit (39) for injection via the latter; and/or
- the dual-fuel injector (1) is configured to set a pressure level of the control fluid in the control fluid reservoir (73) at least temporarily to a pressure level slightly above a pressure level at which gas is made available at the gas injector unit (39) for injection via the latter.

2. Dual-fuel injector according to one of the preceding claims,
**characterized in that**
- the dual-fuel injector (1) has a valve (75), by means of which a pressure level in the control fluid reservoir (73) can be set.

3. Dual-fuel injector (1) according to one of the preceding claims,
**characterized in that**
- the dual-fuel injector (1) has a further control fluid reservoir (15), which is supplied with control fluid subjected to high pressure;
- the first control chamber (25) is supplied with the control fluid from the further control fluid reservoir (15).

4. Dual-fuel injector (1) according to one of the preceding claims,
**characterized in that**
- the dual-fuel injector (1) is configured to supply the second control chamber (57) and/or the gas injector unit (39) with control fluid from the control fluid reservoir (73) in order to control the stroke of the gas nozzle needle (39), wherein the control fluid pressure level in the control fluid reservoir (73) is lowered relative to a control fluid pressure level for controlling the liquid fuel injector unit (5).

5. Dual-fuel injector (1) according to one of the preceding claims,
**characterized in that**
- the gas injector unit (39) has a pilot valve (69) for discharging control fluid from the second control chamber (57);
- the pilot valve (69) is a 3/2-way valve.

6. Dual-fuel injector (1) according to one of the preceding claims,
**characterized in that**
- the volume of the control fluid reservoir (73) corresponds to 50 times to 100 times the volume of the control fluid discharged via the second control chamber (57) in an injection event of the gas injector unit (39).

7. Dual-fuel injector (1) according to one of the preceding claims,
**characterized in that**
- a device for pulsation damping (79) is accommodated in the control fluid reservoir (73).

8. Dual-fuel injector (1) according to one of the preceding claims,
**characterized in that**
- the dual-fuel injector (1) has a flow connection (33) and/or a flow connection (33) that can be interrupted selectively, via which discharged control fluid from the first control chamber (25) can be introduced into the control fluid reservoir (73); and/or
- the dual-fuel injector (1) has a flow connection (61) via which the second control chamber (57) can be supplied with control fluid from the control fluid reservoir (73).

9. Fuel injection device,
**characterized in that**
- the fuel injection device has at least one dual-fuel injector (1) according to one of the preceding claims.

10. Fuel injection device according to Claim 9,
**characterized in that**
- the fuel injection device is configured to supply highly pressurized liquid fuel as a control fluid to the dual-fuel injector (1),
- for a gas injection mode, the fuel injection device is configured to set the pressure level in the control fluid reservoir (73) to a pressure level below the high-pressure level of the control fluid supplied to the dual-fuel injector (1).

11. Fuel injection device according to one of Claims 9 and 10,
**characterized in that**
- the fuel injection device is configured to operate the dual-fuel injector (1) in an ignition jet mode and/or in a liquid fuel mode, wherein the gas injector unit (39) is controlled by means of the control fluid reservoir (73) in the ignition jet mode.

## Revendications

1. Injecteur de carburant à deux carburants (1) pour un dispositif d'injection de carburant, présentant :
- une unité d'injecteur de carburant liquide (5) comprenant un pointeau de buse (7) qui est associé à un agencement de buse à carburant liquide (9) de l'injecteur de carburant à deux carburants (1) et dont la course peut être commandée par le biais d'un premier espace de commande (25) ;
- une unité d'injecteur de gaz (39) comprenant un pointeau de buse à gaz (41) qui est associé à un agencement de buse à gaz (43) de l'injecteur de carburant à deux carburants (1) et dont la course peut être commandée par le biais d'un deuxième espace de commande (57) ;
- le premier (25) et le deuxième (57) espace de commande pour la commande de la course du pointeau de buse respectif (7, 41) pouvant chacun être sollicités avec un fluide de commande et le fluide de commande provenant du premier (25) et du deuxième (57) espace de commande pouvant en outre à chaque fois être coupé ; et
- l'injecteur de carburant à deux carburants (1) présentant un réservoir de fluide de commande (73) dans lequel peut être introduit du fluide de commande coupé provenant du premier espace de commande (25) ; et
- l'injecteur de carburant à deux carburants (1) étant prévu pour solliciter le deuxième espace de commande (57) avec du fluide de commande provenant du réservoir de fluide de commande (73) pour la commande de la course du pointeau de buse à gaz (41),
**caractérisé en ce que**
- l'injecteur de carburant à deux carburants (1) est prévu pour ajuster un niveau de pression du fluide de commande dans le réservoir de fluide de commande (73) à un niveau de pression auquel du gaz est fourni pour une injection par le biais de l'unité d'injecteur de gaz (39) à cette dernière ; et/ou
- l'injecteur de carburant à deux carburants (1) est prévu pour ajuster un niveau de pression du fluide de commande dans le réservoir de fluide de commande (73) au moins temporairement à un niveau de pression légèrement au-dessus d'un niveau de pression auquel du gaz est fourni pour une injection par le biais de l'unité d'injecteur de gaz (39) à cette dernière.

2. Injecteur de carburant à deux carburants selon l'une quelconque des revendications précédentes,
**caractérisé en ce que**
- l'injecteur de carburant à deux carburants (1) présente une soupape (75) au moyen de laquelle un niveau de pression dans le réservoir de fluide de commande (73) peut être ajusté.

3. Injecteur de carburant à deux carburants (1) selon l'une quelconque des revendications précédentes,
**caractérisé en ce que**
- l'injecteur de carburant à deux carburants (1) présente un réservoir de fluide de commande supplémentaire (15) qui est alimenté en fluide de commande sollicité avec une haute pression ;
- le premier espace de commande (25) est sollicité avec le fluide de commande provenant du réservoir de fluide de commande supplémentaire (15).

4. Injecteur de carburant à deux carburants (1) selon l'une quelconque des revendications précédentes,
**caractérisé en ce que**
- l'injecteur de carburant à deux carburants (1) est prévu pour solliciter le deuxième espace de commande (57) et/ou l'unité d'injecteur de gaz (39) avec du fluide de commande provenant du réservoir de fluide de commande (73) pour la commande de la course du pointeau de buse à gaz (39), le niveau de pression du fluide de commande dans le réservoir de fluide de commande (73) étant réduit par rapport à un niveau de pression de fluide de commande pour la commande pilote de l'unité d'injecteur de carburant liquide (5).

5. Injecteur de carburant à deux carburants (1) selon l'une quelconque des revendications précédentes,
**caractérisé en ce que**
- l'unité d'injecteur de gaz (39) présente une soupape pilote (69) pour la coupure de fluide de commande provenant du deuxième espace de commande (57) ;
- la soupape pilote (69) est une soupape à 3/2 voies.

6. Injecteur de carburant à deux carburants (1) selon l'une quelconque des revendications précédentes,
**caractérisé en ce que**
- le volume du réservoir de fluide de commande (73) correspond à 50 fois à 100 fois le volume du fluide de commande coupé par le biais du deuxième espace de commande (57) d'un événement d'injection de l'unité d'injecteur de gaz (39).

7. Injecteur de carburant à deux carburants (1) selon l'une quelconque des revendications précédentes,
**caractérisé en ce**
- **qu'**un dispositif d'amortissement des pulsations (79) est logé dans le réservoir de fluide de commande (73).

8. Injecteur de carburant à deux carburants (1) selon l'une quelconque des revendications précédentes,
**caractérisé en ce que**
- l'injecteur de carburant à deux carburants (1) présente une liaison fluidique (33) et/ou une liaison fluidique (33) pouvant être interrompue de manière sélective, par le biais de laquelle le fluide de commande coupé provenant du premier espace de commande (25) peut être introduit dans le réservoir de fluide de commande (73) ; et/ou
- l'injecteur de carburant à deux carburants (1) présente une liaison fluidique (61) par le biais de laquelle le deuxième espace de commande (57) peut être sollicité avec le fluide de commande provenant du réservoir de fluide de commande (73).

9. Dispositif d'injection de carburant
**caractérisé en ce que**
le dispositif d'injection de carburant présente au moins un injecteur de carburant à deux carburants (1) selon l'une quelconque des revendications précédentes.

10. Dispositif d'injection de carburant selon la revendication 9,
**caractérisé en ce que**
- le dispositif d'injection de carburant est prévu pour alimenter l'injecteur de carburant à deux carburants (1) en carburant liquide sollicité avec une haute pression en tant que fluide de commande,
- le dispositif d'injection de carburant est prévu pour ajuster, dans le réservoir de fluide de commande (73), pour un fonctionnement d'injection de gaz, un niveau de pression en dessous du niveau de haute pression du fluide de commande fourni à l'injecteur de carburant à deux carburants (1).

11. Dispositif d'injection de carburant selon l'une quelconque des revendications 9 et 10,
**caractérisé en ce que**
- le dispositif d'injection de carburant est prévu pour faire fonctionner l'injecteur de carburant à deux carburants (1) dans un mode de fonctionnement à injection pilote et/ou dans un mode de carburant liquide, l'unité d'injecteur de gaz (39) étant commandée en mode d'injection pilote par le biais du réservoir de fluide de commande (73).
